# EUROPEAN PATENT APPLICATION

(11) **EP 1 212 942 A1**
(43) Date of publication of application: **12.06.2002**
(21) Application number: 01310097.9
(22) Date of filing: 03.12.2001
(51) Int. Cl.: A01M 1/04, A01M 1/14, A01M 1/22

(54) **Insect catching device**

(30) Priority: 06.12.2000 GB 0029933
(71) Applicant: Pest West Electronics Ltd., Ossett, West Yorkshire WF5 9NB (GB)
(72) Inventor: Greening, John Llewellyn, Bewdley, Worcestershire DY12 3DW (GB)
(74) Representative: Belcher, Simon James

(57) **Abstract**

An insect catching device includes a source of radiation having a wavelength that is suitable for attracting insects, and an immobiliser component by which insects entering the device are caught. The device includes a casing having a top, a bottom, front and back walls of which at least one is formed as a grille so that it has openings formed in it through which insects can enter the device, and end walls. The grille has a main portion which provides the front and back walls, and end portions which extend inwardly from the main portion. The end walls of the casing are each provided by the end portions of the front and back wall grilles and by a member which extends between the top and bottom of the casing and has at least one cut-out corresponding in shape to one of the end portions of the front and back wall grilles so that the end portions fit into the cut-outs.

## Description

This invention relates to an insect catching device. The invention is concerned in particular with a device of the kind which comprises a source of radiation having a wavelength suitable for attracting insects to the device, and an immobiliser component by which insects entering the device are caught.

Insect catching devices which use a radiation source to attract insects are known. The radiation will often have a wavelength in the ultraviolet region: suitable radiation sources will often emit radiation having a blue appearance. Radiation sources emitting radiation with a blue-green appearance are also known to be suitable for certain applications.

Insects attracted to such a device by a radiation source can be retained in the device by means of an adhesive material provided as a coating on a surface of the device, generally behind the radiation source. Such a device will therefore often comprise one or more tube elements from which ultra violet radiation is emitted, and an adhesive coated back plate.

Insects attracted to a device can also be retained in the device by causing them to fly into a grid which is connected to a high voltage power supply. On contact with the grid, the insects are exposed to a high voltage electric shock which causes them to die or stuns them.

The construction of the casing of the device should be such that obstruction to insects flying towards it is minimised while also providing a barrier to prevent objects being inserted into the casing which could damage the device or the objects. However, the casing should be sufficiently rigid for the device to be able to withstand damage during handling.

The present invention provides an insect catching device in which the end walls of the housing are provided in part by end portions of grilles which fit over the front and back of the casing.

Accordingly, in one aspect, the invention provides an insect catching device which comprises:
a. a source of radiation having a wavelength that is suitable for attracting insects,
b. an immobiliser component by which insects entering the device are caught,
c. a casing having a top, a bottom, front and back walls of which at least one is formed as a grille so that it has openings formed in it through which insects can enter the device, and end walls, in which the grille has a main portion which provides the front and back walls, and end portions which extend inwardly from the main portion, and in which the end walls of the casing are each provided by the end portions of the front and back wall grilles and by a member which extends between the top and bottom of the casing and has at least one cut-out corresponding in shape to one of the end portions of the front and back wall grilles so that the end portions fit into the cut-outs.

The device of the invention has the advantage that it can provide a larger open area for insects to enter the device for capture than is the case with known devices in which the end walls are provided by a non-perforated sheet of material (usually a plastic or a metal).

A further advantage of the device of the invention is that the formation of the opening grille with a main portion for covering the front or back of the device and end portions which extend to provide the end walls is that the rigidity of the grille is enhanced. The use of such a non-planar grille can therefore lead to the rigidity of the device being enhanced compared with known devices in which the opening grille is planar, especially when the grille is in its closed position. Preferably, the internal angle between the main portion of the grille and each of the end portions is at least about 85°; generally, the end portions are approximately perpendicular to the main portion.

The member which forms part of the end walls of the casing will include broad top end bottom limbs for engaging the top and bottom of the casing respectively, and a connecting limb which extends between the two. Preferably, both the front and back walls of the casing is provided by grilles which have main and end portions. In this case, the end wall member can have two cut-out portions to receive end portions on the grilles which provide both the front and back walls. The end wall member can then be generally I-shaped.

The end wall member might however only have a cut-out portion for one grille, for example for the grille which provides the front wall of the casing. In this case, the end wall member can be generally C-shaped.

Preferably, at least the connecting limb of the end wall member, more preferably each of the limbs, is non-planar when viewed in cross-section. For example, the limb (or limbs) might be I-shaped or box-shaped when viewed in cross-section. This can enhance the rigidity of the member.

The top and bottom limbs of the end wall member need not intersect the connecting limb at right angles. It can be preferred for some constructions for one or both of the top and bottom limbs to be tapered inwardly from the connecting limb towards the ends of the top and/or bottom limb.

Preferably, the immobiliser device comprises an electrically charged component. The device can include a switch which isolates components (for example an electrically charged component when present, or fluorescent tubes or other radiation sources) within the device from a power supply when one of the grilles is open.

The immobiliser device within the device of the invention can be provided by an adhesive coated surface. The adhesive material can be provided on a surface of the casing of the device. Preferably, however, the adhesive coating is provided on a sheet element which can be loaded into the device for use, and removed when its insect collecting properties have deteriorated, for example due to deterioration of the adhesive properties of the adhesive material, or due to collection of a large number of insects. The element can be received in appropriate formations such as grooves or slots in the device casing.

Suitable adhesive materials for use in the device of the invention are known, and are available widely on pre-coated sheets for insect collection.

Preferably, at least one of the grilles is pivotally mounted on hinge pins, the grille having slotted plates which the hinge pins engage, the housing including grooves in which the plates can slide when the grille is open to retain the grille in its open position. Preferably, the hinge pins are located on the end-wall members.

Preferably, the device includes a mechanism on one of the end-wall members for locking at least one of the grilles in its closed position. When there are two opening grilles, the mechanism can be used to fasten them to one another, to retain them in their closed position.

The radiation source used in the device of the invention will generally be provided by a fluorescent tube element. Such elements can emit radiation of a suitable wavelength for attracting insects. Such radiation would generally be ultraviolet radiation. Suitable ultraviolet radiation might have, for example, a purple appearance or a blue-green appearance. The radiation source can be provided as an elongate tubular body. The tubular body can be straight, for example to extend between connecting terminals at opposite ends thereof. The radiation source can alternatively have its connection terminals provided adjacent to one another at one end thereof, the radiation source having a generally curved (especially round) configuration.

The present invention will now be described, by way of example only, with reference to the accompanying drawings, in which:
Figure 1 is an isometric view of an insect catching device according to the invention.
Figure 2 is a view of one end of the device shown in Figure 1, with the front wall grille open and the tray for collected insects removed.

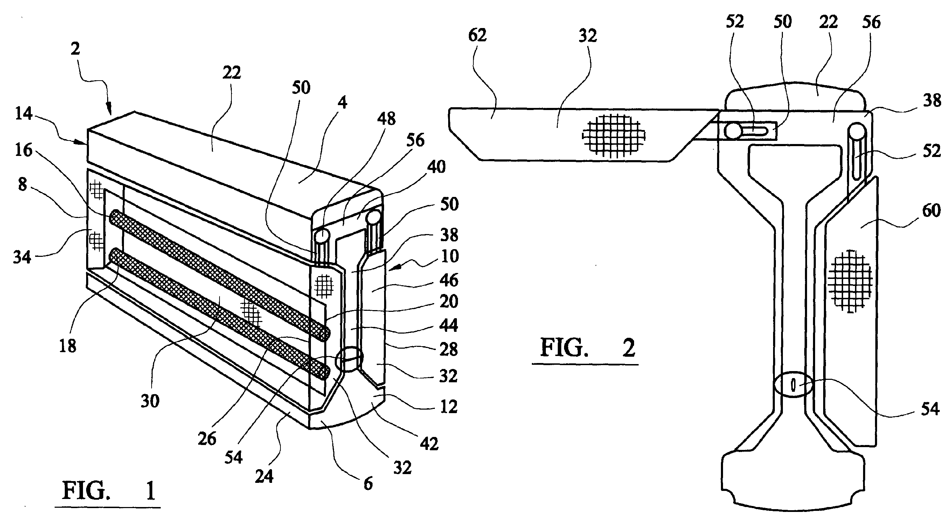

Referring to the drawings, Figure 1 shows an insect catching device 2 which comprises a casing having a top wall 4, a bottom wall 6, front and back walls 8, 10, and end walls 12, 14.

The casing contains two fluorescent tubes 16, 18 which generate ultraviolet radiation of a wavelength such that insects are attracted to the device. A grid 20 is mounted within the casing. A chamber 22 at the top of the casing contains power supply and control components for the fluorescent tubes and the grid. The supply to the grid maintains the grid at high potential so that an insect contacting the grid is killed. The device includes a removable tray 24 at the bottom for collecting killed (or stunned) insects that drop from the grid.

The front and back walls 8, 10 of the casing are provided by grilles 26, 28 which are formed from steel rods by welding. The grilles are largely open, and allow insects to fly into casing, attracted by the UV radiation from the fluorescent tubes, into contact with the grid by which they are killed. Each of the grilles comprises a main portion 30 and two end portions 32, 34, extending approximately perpendicular to the main portion.

Each of the end walls 12, 14 comprises a moulded member 38 which is substantially I-shaped when the device is viewed end on. The member is formed from a plastic material which is flame retardant and resistant to degradation when exposed to UV radiation. A suitable material might be based on a reinforced polycarbonate. It is formed by moulding. The member has top and bottom limbs 40, 42 which engage the top and bottom walls 4, 6 of the casing, and a connecting limb 44 extending between the two. The top, bottom and connecting limbs define two cut-out portions 46 with shapes corresponding to the shapes of the end portions 32, 34 of the grilles which provide the front and back walls of the casing. Accordingly, when the grilles 26, 28 are closed, the casing is closed at the end walls by the moulded member 38 and the end portions 32, 34 of the grilles, the openings in the grilles which result from the welded rod construction allow access to the interior of the device by insects at the end walls. It is only the thin limbs of the moulded member 38 which obstruct access to the interior of the device at the end walls.

The grilles are connected to the moulded members by means of hinge pins 48 on the moulded members 38. Each of the grilles has a pair of slotted plates 50 fastened to it. The hinge pins pass through the slots 52 in the plates. The grilles can be pivoted around the hinge pins allowing the grilles to be opened to provide access to the interior of the casing. Access might be required to clean components of the device or to change the fluorescent tubes. The grilles are locked in the closed position by means of a lock 54 on the moulded member 38.

Each of the hinge pins 48 is located in a groove 56 which is moulded into the moulded member 38. The width of the groove 56 is slightly bigger than the width of the slotted plate 50 so that the plate is able to slide in the groove when it is aligned with it. The plate is aligned with the groove when the grille is in the open position. Sliding the plate into the groove prevents the grille from being moved towards the closed position, allowing access to the interior of the casing without having to hold the grille in its open position. As shown in Figure 2, one of the grilles 60 is in the closed position, and the other grille 62 is retained in the open position by virtue of its plate 50 being slid into the groove 56 in the moulded member 38.

One or both of the grilles has a switch closing plate at its upper edge, which is positioned to apply pressure to one or more switches in the top chamber 22 of the casing. The switch or switches are opened by the closing plate when the grille is in the closed position, and are opened when the grille is not in the closed position. When the switch is open, power to components (such as the fluorescent tubes and the charged grid) within the casing is shut off, allowing work to be performed on the device without risk of electric shock.

## Claims

1. An insect catching device which comprises:
a. a source of radiation having a wavelength that is suitable for attracting insects,
b. an immobiliser component by which insects entering the device are caught,
c. a casing having a top, a bottom, front and back walls of which at least one is formed as a grille so that it has openings formed in it through which insects can enter the device, and end walls, in which the grille has a main portion which provides the front and back walls, and end portions which extend inwardly from the main portion, and in which the end walls of the casing are each provided by the end portions of the front and back wall grilles and by a member which extends between the top and bottom of the casing and has at least one cut-out corresponding in shape to one of the end portions of the front and back wall grilles so that the end portions fit into the cut-outs.

2. A device as claimed in claim 1, in which the immobiliser device comprises an electrically charged component.

3. A device as claimed in claim 1, which includes a switch which isolates components within the device from a power supply when one of the grilles is open.

4. A device as claimed in claim 1, in which the immobiliser device is adhesive coated.

5. A device as claimed in claim 1, in which at least one of the grilles is pivotally mounted on hinge pins, the grille having slotted plates which the hinge pins engage, the housing including grooves in which the plates can slide when the grille is open to retain the grille in its open position.

6. A device as claimed in claim 5, in which the hinge pins are located on the end-wall members.

7. A device as claimed in claim 1, which includes a lock on one of the end-wall members for locking at least one of the grilles in its closed position.

8. A device as claimed in claim 1, in which the internal angle between the main portion and end portions of the grilles is at least about 85°.
